# EUROPÄISCHE PATENTANMELDUNG

(11) **EP 3 070 148 A1**
(43) Veröffentlichungstag der Anmeldung: **21.09.2016**
(21) Anmeldenummer: 15400012.9
(22) Anmeldetag: 18.03.2015
(51) Int. Cl.: C10K 1/16, C10K 3/00, C10B 49/16, C10B 53/02, C10K 1/04

(54) **VERFAHREN UND ANLAGE ZUR SCHNELLPYROLYSE VON BIOMASSE**

(71) Anmelder: L'Air Liquide Société Anonyme pour l'Etude et l'Exploitation des Procédés Georges Claude, 75007 Paris (FR)
(72) Erfinder: Demir, Gamze, 60594 Frankfurt a. M. (DE); Müller-Hagedorn, Matthias, 76199 Karlsruhe (DE); Bachmann, Holger, 64331 Weiterstadt (DE)
(74) Vertreter: Dropsch, Holger

(57) **Zusammenfassung**

Verfahren zur Schnellpyrolyse von Biomasse, insbesondere von Lignocellulose enthaltender Biomasse, wobei die den Pyrolysereaktor verlassenden Pyrolyseprodukte in einem Quench abgekühlt werden, der efindungsgemäß zweistufig ausgestaltet ist. Als Kühlmittel werden dabei abgekühltes und mit Wasser beaufschlagtes Rauchgas und abgekühlter und rückgeführter Pyrolyseteer verwendet. Auf diese Weise werden Alterungsreaktionen des Pyrolyseteers wirkungsvoll unterdrückt und die Stoffeigenschaften sowie die Lager- und Förderfähigkeit des Pyrolyseteers verbessert.

## Beschreibung

### Gebiet der Erfindung

Die Erfindung betrifft ein Verfahren zur Schnellpyrolyse von Biomasse, insbesondere von Lignocellulose enthaltender Biomasse, also cellulose- und ligninhaltiger Stoffe wie beispielsweise Holz, Stroh, Heu, aber auch Papier, wobei gasförmige und feste Pyrolyseprodukte sowie ein flüssiges Pyrolyseprodukt erhalten wird, das synonym als Pyrolyseteer, Pyrolyseöl, Bioteer oder Bioöl bezeichnet wird. Die Erfindung betrifft auch eine Anlage zur Durchführung der Schnellpyrolyse.

### Stand der Technik

Die Schnellpyrolyse (synonym Flash-Pyrolyse, Blitzpyrolyse) wird für die Umsetzung von kohlenstoffhaltigen Einsatzstoffen wie Biomasse in flüssige Pyrolyseprodukte (Pyrolyseöl oder Pyrolyseteer) sowie festen Pyrolysekoks und Pyrolysegas eingesetzt, wobei die erhaltenen Pyrolyseprodukte in Bezug auf die eingesetzte Biomasse energetisch verdichtet sind. Bei der Schnellpyrolyse von Biomasse als Einsatzstoff erfolgt die Umsetzung zu den Pyrolyseprodukten unter Sauerstoffausschluss innerhalb weniger Sekunden bei Temperaturen von ca. 400 bis 600 °C, typischerweise um 500 °C, wobei flüssige (Pyrolyseöl), feste (Biokoks) und ein Restanteil gas- oder dampfförmige Pyrolyseprodukte erhalten werden. Einzelheiten zu der Durchführung des Verfahrens finden sich beispielsweise in den internationalen Patentanmeldungen WO 2003/033624 A1 und WO 2007/017005 A1.

Der Wärmebedarf für die Schnellpyrolyse wird in der Regel durch Verbrennen von Pyrolysekoks oder Pyrolysegasen oder einer Kombination von beiden gedeckt. Zusätzlich kann der Wärmeeintrag durch Verbrennen von Hilfsbrennstoffen, beispielsweise Erdgas, erfolgen. Häufig wird dabei ein im Kreislauf geführter, fester Wärmeträger, beispielweise Sand, aufgeheizt, der dann zum Pyrolysereaktor geführt wird und dort die Wärme auf die Biomasse überträgt.

Der Pyrolysereaktor kann beispielsweise als Doppelschnecken-Mischreaktor ausgestaltet sein. Er umfasst dann einen Doppelschneckenreaktor mit zwei parallel zueinander angeordnet gleichsinnig drehenden und dabei ineinander greifenden Förderschnecken, in dem ein kontinuierlicher Biomassefluss mit einem kontinuierlichen Sand- oder Koksfluss als Wärmeüberträger für mehrere Sekunden auf eine Temperatur um 500 °C erhitzt wird. Reaktoren der beschriebenen Art sind seit langem bekannt und werden auch für die Pyrolyse von Raffinerierückständen verwendet, beispielsweise im Lurgi-Ruhrgas-(LR)-Verfahren, das in Ullmann's Encyclopedia of Industrial Chemistry, Sixth Edition, 1998 Electronic Release, Stichwort "Direct Heating with Circulating Heat Carriers" (H.- J. Weiss) beschreiben ist.

Je nach Betriebsbedingungen und eingesetzter Biomasse entstehen bei der Schnellpyrolyse zu 40 bis 70 Gew.-% flüssiges Pyrolyseöl und zu 15 bis 40 % Pyrolysekoks. Den Rest bildet ein nicht kondensierbares Pyrolysegas, dessen Verbrennungswärme zum Aufheizen oder zur Trocknung genutzt werden kann. Die erhaltenen Pyrolyseprodukte können als energieverdichtete Brennstoffe oder als Einsatz für nachfolgende chemische Umsetzungen oder Synthesen dienen. So können feste und flüssige Pyrolyseprodukte in einem Vergasungsreaktor mit einem Vergasungsmittel wie Sauerstoff und/oder Dampf zu einem Wasserstoff und Kohlenoxide enthaltenden Synthesegas umgesetzt werden.

Um die Pyrolyseprodukte zu erhalten, wird zunächst im Produktgas enthaltener Koks über Heißgaszyklone staubförmig abgeschieden. Bei der nachfolgenden Quenchkühlung wird der Pyrolyseteer erhalten, der hinsichtlich seiner rheologischen Eigenschaften Schweröl ähnelt. Bei der schlagartigen Abkühlung gebildete Aerosole werden über einen Elektrofilter zurück gehalten, bevor das wässrige Kondensat bei Umgebungstemperatur erhalten wird. Es verbleibt ein brennbares Pyrolysegas, das im Wesentlichen aus Kohlendioxid und -monoxid sowie Kohlenwasserstoffen besteht und für die Rauchgaserzeugung Verwendung finden kann.

Der erhaltene Pyrolyseteer, der noch einen Anteil fester Pyrolyseprodukte enthält, wird teilweise zu der Quenchkühlung zurückgeführt und dient dort als Kühlmittel zur Abkühlung der heißen Pyrolysegas bzw. -dämpfe. Der Pyrolyseteer ist ein komplexes Gemisch von Wasser und sauerstoffreichen organische Verbindungen, beispielsweise Alkohole, organische Säuren, Ether, Ester, Aldehyde, Ketone, Phenole usw. darstellt, wie es in dem Artikel von S. Wang, "High-Efficiency Separation of Bio-Oil", http://dx.doi.org/10.5772/51423, abgerufen am 29.01.2015, dargelegt wird. Nachteilig ist es dabei, dass es aufgrund dieser komplexen chemischen Zusammensetzung und der thermischen Belastung in der Quenchkühlung zu Alterungsreaktionen des Pyrolyseteers kommt, die z. B. Polymerisationen, Crack- und sonstige Abbaureaktionen und Oxidationsreaktionen umfassen. Hierdurch werden die rheologischen und weitere Stoffeigenschaften in unerwünschter Weise geändert, so dass seine Verwendungsfähigkeit als Kühlmittel und in nachfolgenden Umwandlungsstufen negativ beeinflusst wird.

### Beschreibung der Erfindung

Vor diesem Hintergrund besteht die Aufgabe der vorliegenden Erfindung darin, ein Verfahren für die Schnellpyrolyse von Biomasse zu Pyrolyseprodukten anzugeben, in dem der erhaltene Pyrolyseteer weniger thermisch belastet wird, so dass nachteilige Alterungsreaktionen verhindert oder zumindest verlangsamt werden. Die Aufgabe wird im Wesentlichen durch ein erfindungsgemäßes Verfahren mit den Merkmalen des Anspruchs 1 und durch eine erfindungsgemäße Anlage mit den Merkmalen des Anspruchs 9 gelöst:

### Erfindungsgemäßes Verfahren:

Verfahren zur Herstellung von Pyrolyseprodukten aus Biomasse, insbesondere lignocellulosehaltiger Biomasse, umfassend folgende Schritte:
   a) Bereitstellen der Biomasse in förderfähiger Form,
   b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
   c) Inkontaktbringen der Biomasse mit dem aufgeheizten Wärmeträger in einem Pyrolysereaktor unter Pyrolysebedingungen, wobei gas- und dampfförmige sowie feste Pyrolyseprodukte erhalten und aus dem Pyrolysereaktor ausgeleitet werden,
   d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
   e) Abkühlen der an festen Pyrolyseprodukten abgereicherten gas- und dampfförmigen Pyrolyseprodukte, wobei ein Pyrolysegas und ein Pyrolyseteer erhalten werden,
   f) Abtrennen des Pyrolysegases von dem Pyrolyseteer mittels einer zweiten mechanischen Trennvorrichtung und Ausleiten des Pyrolysegases aus dem Verfahren, wobei das Pyrolysegas mindestens teilweise als Brennstoff nach Verfahrensschritt b) zurückgeführt wird,
   g) mindestens teilweise Rückführung des Pyrolyseteers nach Verfahrensschritt e),
dadurch gekennzeichnet, dass das Abkühlen der gas- und dampfförmigen Pyrolyseprodukte in Verfahrensschritt e) mindestens zweistufig erfolgt, wobei in einer ersten Kühlstufe das Abkühlen im direkten Wärmetausch gegen das abgekühlte Rauchgas als erstes Kühlmittel und in einer zweiten Kühlstufe das Abkühlen im direkten Wärmetausch gegen den Pyrolyseteer als zweites Kühlmittel erfolgt.

### Erfindungsgemäße Anlage:

Anlage zur Herstellung von Pyrolyseprodukten aus Biomasse, insbesondere lignocellulosehaltiger Biomasse, umfassend folgende Anlagenteile:
   - Fördervorrichtungen für die bereitgestellte Biomasse, den Wärmeträger und die festen Pyrolyseprodukte,
   - eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
   - einen Pyrolysereaktor, umfassend Mittel zum Ableiten der gas- und dampfförmigen sowie festen Pyrolyseprodukte,
   - eine erste mechanische Trennvorrichtung zum Abtrennen der festen Pyrolyseprodukte von den gas- und dampfförmigen Pyrolyseprodukten,
   - eine Abkühlvorrichtung zum Abkühlen der an festen Pyrolyseprodukten abgereicherten gas- und dampfförmigen Pyrolyseprodukte,
   - eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers und zum mindestens teilweise Rückführen des Pyrolyseteers zu der Abkühlvorrichtung,
dadurch gekennzeichnet, dass die Abkühlvorrichtung eine Zuleitung für abgekühltes Rauchgas als erstes Kühlmittel und eine Zuleitung für den Pyrolyseteer als zweites Kühlmittel aufweist.

Weitere vorteilhafte Ausgestaltungen des erfindungsgemäßen Verfahrens und der erfindungsgemäßen Anlage finden sich in den jeweiligen Unteransprüchen.

Unter dem Bereitstellen der Biomasse in förderfähiger Form sollen alle dem Fachmann geläufigen Formen der Aufbereitung, Vorbereitung oder Konditionierung verstanden werden, die es ermöglichen, die Biomasse in einen Zustand zu verbringen, der es gestattet, sie mit gängigen Fördermethoden den einzelnen Verfahrensschritten zuzuführen und sie ferner zwischenzulagern, ohne dass dieser Zustand wesentlich negativ beeinflusst wird. Das Bereitstellen kann beispielsweise das Zerkleinern, Klassieren, Trocknen, Formgebungsschritte wie das Pelletieren sowie die Einstellung eines silofähigen Zustands umfassen.

Als mechanische Trennvorrichtungen werden grundsätzlich alle Vorrichtungen verstanden, die eine Stofftrennung aufgrund mechanischer oder elektromechanischer Einwirkungen gestatten, wie beispielsweise Filter, Elektrofilter, Zyklone, Sedimentationsvorrichtungen.

Mit dem Begriff Biomasse wird die Stoffmasse von Lebewesen oder deren Teile bzw. Körperteile bezeichnet.

Unter Inkontaktbringen in Verfahrensschritt c) des erfindungsgemäßen Verfahrens wird das Zusammenführen der Biomasse mit dem aufgeheizten Wärmeträger im Pyrolysereaktor unter intensivem Vermischen und unter den Bedingungen des intensiven, direkten Wärmetauschs durch direkte Wärmeübertragung verstanden.

Geeignete Pyrolysereaktoren sind dem Fachmann aus dem einschlägigen Stand der Technik an sich bekannt. Insbesondere werden darunter alle Reaktorsysteme verstanden, die einen Transport des Gemisches aus Biomasse und Wärmeträger durch das Reaktorinnere gestatten, wodurch eine definierte Verweilzeit dieses Gemisches bei Pyrolysebedingungen im Zeitbereich von Sekunden bis Minuten eingestellt werden kann.

Unter Pyrolysebedingungen werden physikalisch-chemische Bedingungen verstanden, die eine thermochemische Spaltung organischer Verbindungen unter weitgehend nichtoxidativen Bedingungen ermöglichen. Sie sind aus dem Stand der Technik an sich bekannt um umfassen die Einstellung hoher Temperaturen und die weitgehende Abwesenheit von Oxidationsmitteln, also beispielsweise das Erhitzen unter Luftabschluss. Die Pyrolysebedingungen wird der Fachmann in Abhängigkeit von der zu behandelnden Biomasse geeignet auswählen.

Der Erfindung liegt die Erkenntnis zugrunde, dass durch das erfindungsgemäße, mindestens zweistufige Abkühlen der gas- und dampfförmigen Pyrolyseprodukte die thermische Belastung des als zweiten Kühlmittels verwendeten Pyrolyseteers soweit reduziert wird, dass Alterungsreaktionen des Pyrolyseteers, die seine rheologischen und weitere Stoffeigenschaften in unerwünschter Weise beeinflussen, wirkungsvoll unterdrückt werden. Dies ist überraschend, da auch bei dem erfindungsgemäßen Verfahren der Pyrolyseteer als zweites Kühlmittel im Kreis geführt und somit immer wieder erhöhten Temperaturen ausgesetzt wird. Da diese aber nicht so hoch wird wie bei dem Schnellpyrolyseverfahren gemäß Stand der Technik, und zu erwarten ist, dass die Reaktionsgeschwindigkeit der Alterungsreaktionen mit steigender Temperatur exponentiell ansteigt, bewegt sich der Pyrolyseteer bei dem erfindungsgemäßen Abkühlverfahren offenbar in einem Temperaturfenster, in dem die Alterungsreaktionen nur mit stark reduzierter Reaktionsgeschwindigkeit ablaufen. Da fortwährend ein Teil des Pyrolyseteers aus dem Kreislauf für das zweite Kühlmittel ausgeschleust wird und somit seine mittlere Verweilzeit in diesem Temperaturfenster begrenzt ist, spielen offenbar die langsam verlaufenden Alterungsreaktionen des Pyrolyseteers unter diesen Bedingungen noch keine signifikante Rolle und es kommt zu keiner signifikanten Verschlechterung der Eigenschaften des Pyrolyseteer im Kreislauf für das zweite Kühlmittel.

### Bevorzugte Ausgestaltungen der Erfindung

Eine bevorzugte Ausgestaltung des erfindungsgemäßen Verfahrens ist dadurch gekennzeichnet, dass die Temperatur des ersten Kühlmittels 180 bis 220 °C, bevorzugt 190 bis 210 °C beträgt und dass die Temperatur des zweiten Kühlmittels 70 bis 110 °C, bevorzugt 80 bis 100 °C beträgt, wobei die Austrittstemperatur der Pyrolyseprodukte aus der ersten Kühlstufe 300 bis 400 °C, bevorzugt 330 bis 370 °C beträgt und die Austrittstemperatur der Pyrolyseprodukte aus der zweiten Kühlstufe 80 bis 120 °C, bevorzugt 90 bis 110 °C beträgt. Es hat sich gezeigt, dass durch Auswahl dieser Temperaturbereiche eine effiziente Abkühlung der Pyrolyseprodukte möglich ist, ohne dass sich die Eigenschaften des als zweites Kühlmittel verwendeten Pyrolyseteers signifikant verschlechtern.

Als besonders vorteilhaft hat es sich herausgestellt, wenn dem als erstes Kühlmittel verwendeten Rauchgas vor dem Einleiten in die erste Kühlstufe Wasser in dampfförmiger und/oder flüssiger Form zugegeben wird, wodurch sich seine Temperatur erniedrigt und sich sein Wassergehalt erhöht. Nach der Wasserzugabe beträgt der Volumenanteil von enthaltenem Wasser im Rauchgas bevorzugt 40 bis 60 Vol.-%, besonders bevorzugt 45 bis 55 Vol.-%. Durch die Wasserzugabe ist eine bequeme und effiziente Möglichkeit zur Temperatureinstellung des Rauchgases gegeben. Andererseits wird dadurch die spezifische Wärmekapazität des Rauchgases deutlich erhöht, wodurch seine Wirksamkeit als erstes Kühlmittels erheblich zunimmt.

In Weiterbildung der Erfindung wird ein Teil des als zweites Kühlmittel verwendeten Pyrolyseteers aus dem Kühlkreislauf für das zweite Kühlmittel ausgeleitet und mit festen Pyrolyseprodukten zu einer Suspension vermischt, die als Einsatzstoff in einer nachgeschalteten Vergasungsstufe verwendet wird, in der ein Wasserstoff und Kohlenoxide enthaltendes Synthesegas als Produkt erhalten wird. Auf diese Weise wird die Biomasse letztlich in ein wertvolles, als Chemierohstoff oder umweltfreundlicher Brennstoff einsetzbares Produkt überführt.

In bevorzugter Ausgestaltung des erfindungsgemäßen Verfahrens ist der Pyrolysereaktor als Schneckenextruder ausgestaltet. Hierdurch wird einerseits der Transport des Gemisches aus Biomasse und Wärmeträger und somit das Einstellen einer definierten Verweilzeit unter Pyrolysebedingungen ermöglicht. Andererseits erfolgt bei dem Transport eine intensive Durchmischung der Gemischkomponenten, die den Wärmeübergang von dem Wärmeträger auf die Biomasse stark erhöht.

Als günstig hat es sich erwiesen, wenn als Wärmeträger Sand verwendet wird. Sand ist chemisch weitgehend inert und katalysiert somit keine unerwünschten Nebenreaktionen. Er weist gute Wärmerträgereigenschaften, eine hohe mechanische und thermische Stabilität sowie einen hohen Schmelzpunkt auf und ist preisgünstig im Handel erhältlich.

Eine bevorzugte Ausgestaltung der erfindungsgemäßen Anlage ist dadurch gekennzeichnet, dass auch eine Abzugsleitung zum Ausleiten eines Teils des als zweites Kühlmittel verwendeten Pyrolyseteers aus dem Kühlkreislauf für das zweite Kühlmittel umfasst wird. Auf diese Weise kann ein Teil des Pyrolyseteers einfach aus dem Kühlkreislauf für das zweite Kühlmittel entfernt und der nachfolgenden Nutzung zugeführt werden.

In Weiterbildung der Erfindung umfasst die Anlage auch eine Mischvorrichtung zum Mischen des ausgeleiteten Teils des als zweites Kühlmittel verwendeten Pyrolyseteers mit festen Pyrolyseprodukten zu einer Suspension und eine Vergasungsvorrichtung zum Vergasen der Suspension in ein Wasserstoff und Kohlenoxide enthaltendes Synthesegasprodukt. Durch diese Weiterbildung der erfindungsgemäßen Anlage wird die Biomasse letztlich in ein wertvolles, als Chemierohstoff oder umweltfreundlicher Brennstoff einsetzbares Produkt überführt.

### Ausführungs- und Zahlenbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

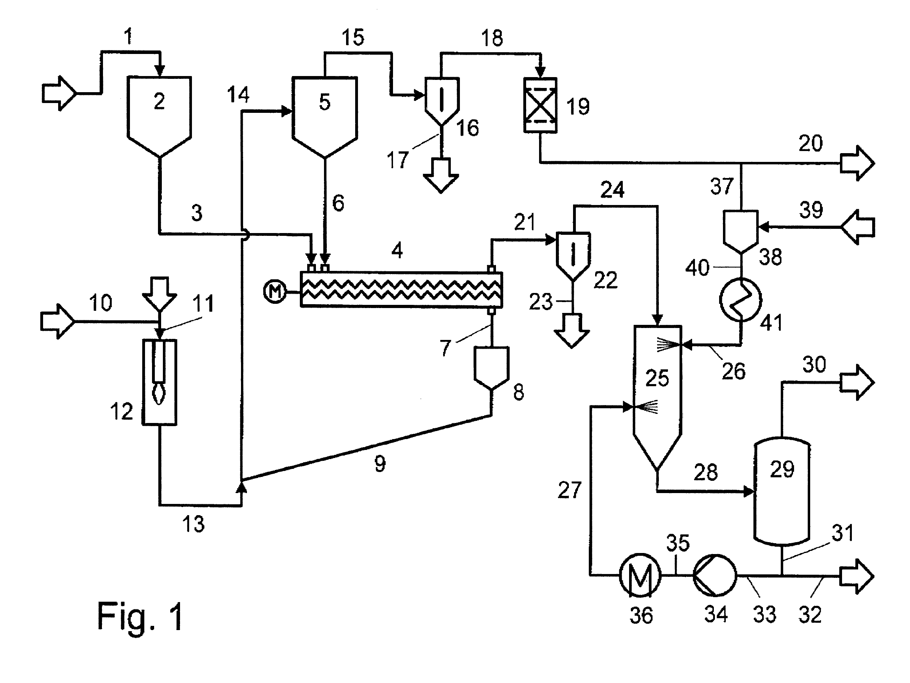

Es zeigt die einzige Figur
- Fig. 1: ein Fließschema einer beispielhaften Ausgestaltung des erfindungsgemäßen Verfahrens bzw. der erfindungsgemäßen Anlage.

In der in Fig. 1 schematisch dargestellten Ausgestaltung des erfindungsgemäßen Verfahrens bzw. der erfindungsgemäßen Anlage wird über Leitung 1 Biomasse in förderfähiger Form in das Silo 2 gefördert und dort zwischengelagert. Rohstoff des Verfahrens kann prinzipiell jede Art trockener, insbesondere lignocellulosehaltiger Biomasse sein, die durch Nutzung von Reststoffen aus der Agrar- und Forstwirtschaft sowie der Landschaftspflege anfällt. Im vorliegenden Ausführungsbeispiel wird getrocknetes und zerkleinertes Stroh als Biomasse eingesetzt.

Aus dem Silo 2 wird die Biomasse über Leitung 3 unter Verwendung bildlich nicht dargestellter Förder-, Dosierungs- und ggf. Zwischenlagerungsvorrichtungen dem Pyrolysereaktor 4 aufgegeben. Bei diesem handelt es sich um einen an sich bekannten Doppelschneckenreaktor mit zwei parallel zueinander angeordnet gleichsinnig drehenden und dabei ineinander greifenden Förderschnecken. Durch diesen Reaktoraufbau wird ein kontinuierlicher Biomassefluss durch den Reaktor und somit definierte Verweilzeiten von wenigen Sekunden, typischerweise 1 bis 5 s, bei Pyrolysebedingungen gewährleistet. Gleichzeitig erfolgt eine intensive Vermischung der Biomasse mit dem als Wärmeträger verwendeten, vorerhitzten Sand, der aus einem Vorratsbehälter 5 entnommen und über Leitung 6 dem Pyrolysereaktor 4 aufgegeben wird. Hierdurch stellt sich eine Pyrolysetemperatur von ca. 500 °C ein.

Nach Durchlaufen des Pyrolysereaktors 4 wird ein Teil der festen Reaktionsprodukte (Pyrolysekoks) sowie der abgekühlte Wärmeträger über Leitung 7 unter Verwendung bildlich nicht dargestellter Fördervorrichtungen aus dem Pyrolysereaktor ausgeleitet, in dem Zwischenbehälter 8 gelagert und über Leitung 9 weitergeführt. Über Leitungen 10 und 11 werden ein gasförmiger Brennstoff und Verbrennungsluft zum Brenner 12 geführt und dort verbrannt. Als gasförmiger Brennstoff wird rückgeführtes Pyrolysegas und/oder Erdgas verwendet. Das dabei erzeugte Rauchgas wird über Leitung 13 aus dem Brenner ausgeleitet und mit den über Leitung 9 herangeführten Feststoffen vereinigt. Hierdurch erfolgt die Wiederaufheizung des Wärmeträgers sowie sein pneumatischer Transport über Leitung 14 zurück in den Vorratsbehälter 5, wodurch er für einen erneuten Einsatz im Pyrolysereaktor zur Verfügung steht.

Über Leitung 15 wird das teilweise abgekühlte Rauchgas aus dem Vorratsbehälter 5 ausgeleitet. Es enthält noch einen signifikanten Anteil an Feststoffen, insbesondere Pyrolysekoks. Die Feststoffe werden im Zyklon 16 abgeschieden und über Leitung 17 der bildlich nicht dargestellten Koksaufbereitung zugeführt. Über Leitung 18 wird das teilweise von Feststoffanteilen befreite Rauchgas einem Filter 19 zugeführt, in dem eine weitere Feststoffabscheidung erfolgt. Über Leitung 20 wird das weitgehend von Feststoffen befreite Rauchgas der Abgasentsorgung zugeführt.

Über Leitung 21 werden die gas- und dampfförmigen Pyrolyseprodukte aus dem Pyrolysereaktor ausgeleitet und einem Zyklon 22 zugeführt. In diesem erfolgt eine Abtrennung mitgerissener Feststoffe, insbesondere von Pyrolysekoks, der über Leitung 23 der bildlich nicht dargestellten Koksaufbereitung zugeführt wird. Über Leitung 24 werden die teilweise von Feststoffen befreiten gas- und dampfförmigen Pyrolyseprodukte der Abkühlvorrichtung 25 zugeführt, die erfindungsgemäß als zweistufiger Quench ausgestaltet ist. Da seit dem Verlassen des Pyrolysereaktors noch keine signifikante Abkühlung erfolgte, beträgt die Eintrittstemperatur der gas- und dampfförmigen Pyrolyseprodukte in die Abkühlvorrichtung immer noch rund 500 °C.

In der Abkühlvorrichtung erfolgt in der ersten Quenchstufe eine Abkühlung im direkten Wärmetausch gegen abgekühltes Rauchgas als erstes Kühlmittel, das eine Temperatur von rund 200 °C aufweist, über Leitung 26 der Abkühlvorrichtung zugeführt und über eine in Fig. 1 lediglich angedeutete Verteilungsvorrichtung, beispielsweise eine Düsenschar, aufgegeben wird. Hierdurch erfolgt eine Abkühlung auf rund 350 °C nach der ersten Quenchstufe. In der nachfolgenden zweiten Quenchstufe erfolgt eine weitere Abkühlung gegen den Pyrolyseteer als zweites Kühlmittel, der eine Temperatur von rund 90 °C aufweist, über Leitung 27 der Abkühlvorrichtung zugeführt und ebenfalls über eine geeignete Verteilungsvorrichtung aufgegeben wird. Durch die Abkühlung erfolgt eine Kondensation der dampfförmigen Pyrolyseprodukte und es scheidet sich der Pyrolyseteers ab, der noch einen geringen Feststoffanteil enthält. Der Pyrolyseteer und die verbliebenen gasförmigen Pyrolyseprodukte, das Pyrolysegas, verlassen über Leitung 28 mit einer Temperatur von 106 °C die Abkühlvorrichtung und werden in eine Phasentrennvorrichtung 29 eingeleitet. In dieser erfolgt die Trennung des Pyrolyseteers von dem Pyrolysegas, das über Leitung 30 ausgeleitet und über Leitung 10 mindestens teilweise als gasförmiger Brennstoff zum Brenner 12 zurückgeführt wird. Da das Pyrolysegas noch eine erhebliche Menge an Wasser enthalten kann, wird es vor der Rückführung zum Brenner optional einer weiteren, nicht bildlich dargestellten Phasentrennvorrichtung zugeführt, in der Wasser abgetrennt wird.

Der noch einen geringen Feststoffanteil enthaltende Pyrolyseteer wird über Leitung 31 aus der Phasentrennvorrichtung 29 abgeführt und teilweise über Leitung 32 als Flüssigprodukt aus dem Verfahren ausgeleitet. Ein anderer Anteil des Pyrolyseteers wird mittels einer Pumpe 34 über Leitungen 33 und 35 einem Wärmetauscher 36 zugeführt, dort auf eine Temperatur von rund 90 °C abgekühlt und anschließend über Leitung 27 zu der Abkühlvorrichtung als zweites Kühlmittel zurückgeführt.

Erfindungsgemäß wird ein Teil des über Leitung 20 aus dem Verfahren ausgeleiteten Rauchgases über Leitung 37 abgezogen und in der Mischkammer 38 mit Wasser vermischt, das über Leitung 39 herangeführt wird. Die Wasserzugabe erfolgt dabei bevorzugt dampfförmig und flüssig, wobei diese Medien der Mischkammer 38 über getrennte Leitungen zugeführt werden (bildlich nicht dargestellt). Nach der Wasserzugabe beträgt der Volumenanteil des Wassers im Rauchgas typischerweise zwischen 45 und 55 Vol.-%. Das abgekühlte und mit Wasser beaufschlagte Rauchgas wird über Leitung 40 einem Luftkühler 41 zugeführt und dort weiter abgekühlt. Es wird schließlich mit einer Temperatur von rund 200 °C über Leitung 26 der Abkühlvorrichtung als erstes Kühlmittel zugeführt.

### Gewerbliche Anwendbarkelt

Mit der Erfindung wird eine Verbesserung eines Schnellpyrolyseverfahrens zur Verfügung gestellt, die es ermöglicht, Alterungsreaktionen des Pyrolyseteers wirkungsvoll zu unterdrücken oder zu verzögern. Dies hat positive Auswirkungen auf die rheologischen und weitere physikalisch-chemische Eigenschaften des Pyrolyseteers und verbessert somit seine Verwendbarkeit als zweites Kühlmittel in der Abkühlvorrichtung, andererseits aber auch die Produkteigenschaften des als Reaktionsprodukt gewonnenen Anteils des Pyrolyseteer und seine Verwendung in nachgeschalteten Prozessstufen, beispielsweise der nachfolgenden Vergasung. Gleichzeitig verbessert sich auch die Lagerund Förderfähigkeit des Pyrolyseteers.

### Bezugszeichenliste

- 1: Leitung
- 2: Silo
- 3: Leitung
- 4: Pyrolysereaktor
- 5: Vorratsbehälter
- 6: Leitung
- 7: Leitung
- 8: Zwischenbehälter
- 9: Leitung
- 10: Leitung
- 11: Leitung
- 12: Brenner
- 13: Leitung
- 14: Leitung
- 15: Leitung
- 16: Zyklon
- 17: Leitung
- 18: Leitung
- 19: Filter
- 20: Leitung
- 21: Leitung
- 22: Zyklon
- 23: Leitung
- 24: Leitung
- 25: Abkühlvorrichtung
- 26: Leitung
- 27: Leitung
- 28: Leitung
- 29: Phasentrennvorrichtung
- 30: Leitung
- 31: Leitung
- 32: Leitung
- 33: Leitung
- 34: Pumpe
- 35: Leitung
- 36: Wärmetauscher
- 37: Leitung
- 38: Mischkammer
- 39: Leitung
- 40: Leitung
- 41: Luftkühler

## Patentansprüche

1. Verfahren zur Herstellung von Pyrolyseprodukten aus Biomasse, insbesondere lignocellulosehaltiger Biomasse, umfassend folgende Schritte:
a) Bereitstellen der Biomasse in förderfähiger Form,
b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
c) Inkontaktbringen der Biomasse mit dem aufgeheizten Wärmeträger in einem Pyrolysereaktor, wobei gas- und dampfförmige sowie feste Pyrolyseprodukte erhalten und aus dem Pyrolysereaktor ausgeleitet werden,
d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
e) Abkühlen der an festen Pyrolyseprodukten abgereicherten gas- und dampfförmigen Pyrolyseprodukte, wobei ein Pyrolysegas und ein Pyrolyseteer erhalten werden,
f) Abtrennen des Pyrolysegases von dem Pyrolyseteer mittels einer zweiten mechanischen Trennvorrichtung und Ausleiten des Pyrolysegases aus dem Verfahren, wobei das Pyrolysegas mindestens teilweise als Brennstoff nach Verfahrensschritt b) zurückgeführt wird,
g) mindestens teilweise Rückführung des Pyrolyseteers nach Verfahrensschritt e),
**dadurch gekennzeichnet, dass** das Abkühlen der gas- und dampfförmigen Pyrolyseprodukte in Verfahrensschritt e) mindestens zweistufig erfolgt, wobei in einer ersten Kühlstufe das Abkühlen im direkten Wärmetausch gegen das abgekühlte Rauchgas als erstes Kühlmittel und in einer zweiten Kühlstufe das Abkühlen im direkten Wärmetausch gegen den Pyrolyseteer als zweites Kühlmittel erfolgt.

2. Verfahren nach Anspruch 1, **dadurch gekennzeichnet, dass** die Temperatur des ersten Kühlmittels 180 bis 220 °C, bevorzugt 190 bis 210 °C beträgt und dass die Temperatur des zweiten Kühlmittels 70 bis 110 °C, bevorzugt 80 bis 100 °C beträgt.

3. Verfahren nach Anspruch 1 oder 2, **dadurch gekennzeichnet, dass** die Austrittstemperatur der Pyrolyseprodukte aus der ersten Kühlstufe 300 bis 400 °C, bevorzugt 330 bis 370 °C beträgt.

4. Verfahren nach einem der Ansprüche 1 bis 3, **dadurch gekennzeichnet, dass** die Austrittstemperatur der Pyrolyseprodukte aus der zweiten Kühlstufe 80 bis 120 °C, bevorzugt 90 bis 110 °C beträgt.

5. Verfahren nach einem der vorigen Ansprüche, **dadurch gekennzeichnet, dass** dem als erstes Kühlmittel verwendeten Rauchgas vor dem Einleiten in die erste Kühlstufe Wasser in dampfförmiger und/oder flüssiger Form zugegeben wird, wobei nach der Wasserzugabe der Volumenanteil von enthaltenem Wasser im Rauchgas bevorzugt 40 bis 60 Vol.-%, besonders bevorzugt 45 bis 55 Vol.-% beträgt.

6. Verfahren nach einem der vorigen Ansprüche, **dadurch gekennzeichnet, dass** ein Teil des als zweites Kühlmittel verwendeten Pyrolyseteers aus dem Kühlkreislauf für das zweite Kühlmittel ausgeleitet und mit festen Pyrolyseprodukten zu einer Suspension vermischt wird, die als Einsatzstoff in einer nachgeschalteten Vergasungsstufe verwendet wird, in der ein Wasserstoff und Kohlenoxide enthaltendes Synthesegas als Produkt erhalten wird.

7. Verfahren nach einem der vorigen Ansprüche, **dadurch gekennzeichnet, dass** der Pyrolysereaktor als Schneckenextruder ausgestaltet ist.

8. Verfahren nach einem der vorigen Ansprüche, **dadurch gekennzeichnet, dass** als Wärmeträger Sand verwendet wird.

9. Anlage zur Herstellung von Pyrolyseprodukten aus Biomasse, insbesondere lignocellulosehaltiger Biomasse, umfassend folgende Anlagenteile:
- Fördervorrichtungen für die bereitgestellte Biomasse, den Wärmeträger und die festen Pyrolyseprodukte,
- eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
- einen Pyrolysereaktor, umfassend Mittel zum Ableiten der gas- und dampfförmigen sowie festen Pyrolyseprodukte,
- eine erste mechanische Trennvorrichtung zum Abtrennen der festen Pyrolyseprodukte von den gas- und dampfförmigen Pyrolyseprodukten,
- eine Abkühlvorrichtung zum Abkühlen der an festen Pyrolyseprodukten abgereicherten gas- und dampfförmigen Pyrolyseprodukte,
- eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers und zum mindestens teilweise Rückführen des Pyrolyseteers zu der Abkühlvorrichtung,
**dadurch gekennzeichnet, dass** die Abkühlvorrichtung eine Zuleitung für abgekühltes Rauchgas als erstes Kühlmittel und eine Zuleitung für den Pyrolyseteer als zweites Kühlmittel aufweist.

10. Anlage nach Anspruch 9, ferner umfassend eine Abzugsleitung zum Ausleiten eines Teils des als zweites Kühlmittel verwendeten Pyrolyseteers aus dem Kühlkreislauf für das zweite Kühlmittel.

11. Anlage nach einem der vorigen Ansprüche, ferner umfassend eine Mischvorrichtung zum Mischen des ausgeleiteten Teils des als zweites Kühlmittel verwendeten Pyrolyseteers mit festen Pyrolyseprodukten zu einer Suspension.

12. Anlage nach einem der vorigen Ansprüche, ferner umfassend eine Vergasungsvorrichtung zum Vergasen der Suspension in ein Wasserstoff und Kohlenoxide enthaltendes Synthesegasprodukt.
